(19) Europäisches Patentamt
European Patent Office
Office européen des brevets

(11) EP 2 864 134 B1

(12) **FASCICULE DE BREVET EUROPEEN**

(45) Date de publication et mention de la délivrance du brevet:
**04.05.2016 Bulletin 2016/18**

(21) Numéro de dépôt: **13729372.6**

(22) Date de dépôt: **18.06.2013**

(51) Int Cl.:
***B60C 1/00*** *(2006.01)* ***C08K 3/26*** *(2006.01)*
***C08K 5/09*** *(2006.01)* ***C08K 5/098*** *(2006.01)*
***C08J 9/00*** *(2006.01)* ***C08J 9/08*** *(2006.01)*
***C08L 21/00*** *(2006.01)*

(86) Numéro de dépôt international:
**PCT/EP2013/062585**

(87) Numéro de publication internationale:
**WO 2013/189912 (27.12.2013 Gazette 2013/52)**

(54) **COMPOSITION DE CAOUTCHOUC THERMO-EXPANSIBLE ET PNEUMATIQUE POUR VEHICULE DONT LA BANDE DE ROULEMENT COMPORTE UNE TELLE COMPOSITION**

THERMISCH EXPANDIERBARE KAUTSCHUKZUSAMMENSETZUNG UND FAHRZEUGLUFTREIFEN MIT EINER SOLCHEN MISCHUNG

THERMOEXPANSIBLE RUBBER COMPOSITION AND VEHICLE PNEUMATIC TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2012 FR 1255922**

(43) Date de publication de la demande:
**29.04.2015 Bulletin 2015/18**

(73) Titulaires:
- **Compagnie Générale des Etablissements Michelin**
**63000 Clermont-Ferrand (FR)**
- **MICHELIN Recherche et Technique S.A.**
**1763 Granges-Paccot (CH)**

(72) Inventeurs:
- **OCHIAI, Chika**
**Tokyo 102-8176 (JP)**
- **PAGANO, Salvatore**
**Tokyo 102-8176 (JP)**

(74) Mandataire: **Ribière, Joel**
**Manufacture Française des Pneumatiques Michelin**
**23, Place des Carmes-Déchaux**
**DGD/LG/PI - F35 - Ladoux**
**63040 Clermont-Ferrand Cedex (FR)**

(56) Documents cités:
**WO-A1-2011/064128** **GB-A- 1 367 776**
**KR-A- 20030 019 982** **US-A1- 2003 119 927**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**Description**

1. DOMAINE DE L'INVENTION

L'invention est relative aux compositions caoutchouteuses utilisées comme bandes de roulement de pneumatiques pour véhicules, en particulier de pneumatiques «hiver» aptes à rouler sur des sols recouverts de glace ou verglas sans être pourvus de clous (aussi appelés pneumatiques *"studless"*).

Elle est plus particulièrement relative aux bandes de roulement de pneumatiques hiver spécifiquement adaptées à un roulage sous des conditions dites de "glace fondante" rencontrées dans un domaine de températures typiquement comprises entre -5°C et 0°C. On rappelle en effet que, dans un tel domaine, la pression des pneumatiques au passage d'un véhicule provoque une fusion superficielle de la glace qui se recouvre d'un mince film d'eau nuisible à l'adhérence de ces pneumatiques.

2. ETAT DE LA TECHNIQUE

Pour éviter les effets néfastes des clous, notamment leur forte action abrasive sur le revêtement du sol lui-même et un comportement routier notablement dégradé sur sol sec, les manufacturiers de pneumatiques ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles dans la composition constitutive de la bande de roulement. De telles poudres se solubilisent plus ou moins au contact de la neige ou de la glace fondue, ce qui permet d'une part la création à la surface de la bande de roulement de porosités susceptibles d'améliorer l'accrochage de la bande de roulement sur le sol et d'autre part la création de gorges jouant le rôle de canaux d'évacuation du film liquide créé entre le pneumatique et le sol. A titre d'exemples de telles poudres hydrosolubles, on peut citer par exemple l'emploi de poudre de cellulose, d'alcool vinylique ou d'amidon, ou encore des poudres de gomme de guar ou de gomme de xanthane (voir par exemple demandes de brevet JP 3-159803, JP 2002-211203, EP 940 435, WO 2008/080750, WO 2008/080751).

Il a également été proposé d'utiliser des particules de poudre qui ne sont ni à haute dureté ni hydrosolubles, aptes malgré tout à générer une microrugosité de surface efficace (voir en particulier demandes de brevet WO 2009/083125 et WO 2009/112220).

Enfin, pour améliorer les performances d'adhérence sur glace d'une bande de roulement, il est également bien connu d'utiliser une couche de caoutchouc mousse à base d'élastomère diénique, d'un agent d'expansion ("*blowing agent"*) et divers autres additifs tels que notamment un activateur d'expansion. Ces agents d'expansion, tels que par exemple des composés nitro, sulfonyl ou azo, sont aptes à libérer lors d'une activation thermique, par exemple lors de la vulcanisation du pneumatique, une quantité de gaz importante, notamment de l'azote, et ainsi conduire à la formation de bulles au sein d'un matériau suffisamment mou tel qu'une composition de caoutchouc comportant de tels agents d'expansion. De telles formulations de caoutchouc mousse pour pneumatiques hiver ont été décrites par exemple dans les documents brevet JP 2003-183434, JP 2004-091747, JP 2006-299031, JP 2007-039499, JP 2007-314683, JP2008-001826, JP 2008-150413, EP 826 522, US 5 147 477, US 6 336 487.

Le document WO-A-2011/064128 divulgue une composition de caoutchouc destinée à la préparation d'une bande de roulement pneumatique. La composition de caoutchouc comprend un élastomère diénique, plus de 50 pce d'une charge renforçante, 5-25 pce d'un agent d'expansion (1) et entre 5 et 25 pce d'un composé thermofusible (2) dont la température de fusion est comprise entre 70 °C et 150 °C. Le carbonate de sodium n'est pas utilisé sous forme de particules.

Le document GB-A-1 367 776 décrit un procédé pour la préparation d'un tuyau comportant une couche de polymère présent sous forme de mousse. Ce polymère, qui peut être un caoutchouc, est expansé en présence d'un agent d'expansion tel qu'un dérivé azoïque ou de manière alternative en présence d'un agent d'expansion comprenant un mélange de bicarbonate associé à de l'acide citrique. Le bicarbonate n'est pas utilisé sous forme de particules.

Le document KR-A-20030019982 se réfère à une composition de caoutchouc destinée à la préparation d'une bande de roulement de pneumatique comprenant un élastomère diénique, 80 pce de charge renforçante et 2 à 5 pce d'un agent d'expansion tel qu'un dérivé du benzène sulfonyle hydrazine ayant un taille de 3 $\mu$m à 4 $\mu$m. La composition ne comprend pas de carbonate de sodium ou potassium en tant qu'agent d'expansion et n'est pas associé à un acide carboxylique.

Le document WO-A-2012/163998 divulgue une composition de caoutchouc comprenant des particules de carbonate ou hydrogénocarbonate de sodium ou potassium en tant qu'agent expanseur et combiné à un acide carboxylique en tant qu'agent activateur d'expansion. Toutefois, le diamètre des particules de carbonate ou hydrogénocarbonate de sodium est de 100 microns.

Toutefois, ces agents d'expansion et/ou activateurs d'expansion peuvent ralentir de manière notable les durées de cuisson des compositions de caoutchouc, ce qui est bien entendu préjudiciable aux cadences de fabrication des pneumatiques, tant et si bien qu'il s'avère difficile pour l'homme du métier de trouver des formulations de caoutchouc mousse permettant d'une part d'augmenter de manière importante l'adhérence sur glace fondante, sans pénaliser d'autre part les propriétés de cuisson.

## 3. BREVE DESCRIPTION DE L'INVENTION

Or, au cours de leurs recherches sur la technologie ci-dessus relative à l'utilisation de caoutchouc mousse, les Demanderesses ont découvert une formulation spécifique à base d'un taux élevé d'un agent d'expansion particulier et d'un activateur spécifiques combinés, qui permet de pallier le problème exposé ci-dessus, c'est-à-dire d'améliorer fortement l'adhérence sur glace fondante des bandes de roulement, ceci sans pénaliser les propriétés de vulcanisation des compositions de caoutchouc.

En conséquence, la présente invention concerne un pneumatique dont la bande de roulement comporte, à l'état non vulcanisé, une composition de caoutchouc thermo-expansible comprenant au moins un élastomère diénique, plus de 50 pce d'une charge renforçante, entre 5 et 25 pce de microparticules d'un carbonate ou hydrogénocarbonate de sodium ou potassium ayant une taille médiane en poids comprise entre 1 et 50 μm, entre 2 et 20 pce d'un acide carboxylique dont la température de fusion est comprise entre 60°C et 220°C, la teneur totale en (hydrogéno)carbonate et acide carboxylique étant supérieure à 10 pce.

L'invention concerne également en soi la composition de caoutchouc thermo-expansible telle que définie ci-dessus.

Les pneumatiques de l'invention sont particulièrement destinés, une fois vulcanisés, à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (e.g. métro, bus, engins de transport routier tels que camions, tracteurs).

L'invention ainsi que ses avantages seront aisément compris à la lumière de la description et des exemples de réalisation qui suivent.

## 4. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le pneumatique de l'invention a donc pour caractéristique essentielle que sa bande de roulement à l'état non vulcanisé, tout au moins pour sa portion (patrie radialement la plus externe) destinée à entrer directement en contact avec la surface de la route, comporte une composition de caoutchouc thermo-expansible comportant au moins :

- un (au moins un, c'est-à-dire un ou plusieurs) élastomère diénique ;
- plus de 50 pce d'une (au moins une, c'est-à-dire une ou plusieurs) charge renforçante ;
- entre 5 et 25 pce de microparticules d'un (au moins un, c'est-à-dire un ou plusieurs) carbonate ou hydrogénocarbonate de sodium ou potassium, lesdites microparticules ayant une taille médiane en poids comprise entre 1 et 50 μm ;
- entre 2 et 20 pce d'un (au moins un, c'est-à-dire un ou plusieurs) acide carboxylique dont la température de fusion est comprise entre 60°C et 220°C ;
- la teneur totale en (hydrogéno)carbonate et acide carboxylique étant supérieure à 10 pce.

Les différents composants ci-dessus sont décrits en détail ci-après.

### 4.1. Elastomère diénique

Par élastomère (ou caoutchouc, les deux termes étant synonymes) du type "diénique", on rappelle que doit

être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, ainsi que par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, la composition de caoutchouc thermo-expansible comporte 50 à 100 pce de caoutchouc naturel ou de polyisoprène de synthèse, ledit caoutchouc naturel ou polyisoprène de synthèse pouvant être utilisé notamment en coupage (mélange) avec au plus 50 pce d'un polybutadiène ayant un taux de liaisons cis-1,4 supérieur à 90%.

Selon un autre mode de réalisation particulier et préférentiel, la composition de caoutchouc thermo-expansible comporte 50 à 100 pce d'un polybutadiène ayant un taux de liaisons cis-1,4 supérieur à 90%, ledit polybutadiène pouvant être utilisé notamment en coupage avec au plus 50 pce de caoutchouc naturel ou polyisoprène de synthèse.

Aux élastomères diéniques des bandes de roulement selon l'invention pourraient être associés, en quantité minoritaire, des élastomères synthétiques autres que diéniques, voire des polymères autres que des élastomères, par exemple des polymères thermoplastiques.

4.2. Charge

Toute charge connue pour ses capacités à renforcer une composition de caoutchouc est utilisable, par exemple une charge organique telle que du noir de carbone, ou encore une charge inorganique telle que de la silice à laquelle est associé de manière connue un agent de couplage.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 50 et 150 pce. Une teneur égale ou supérieure à 50 pce est favorable à une bonne tenue mécanique ; au-delà de 150 pce, il existe un risque de rigidité excessive de la couche de caoutchouc. Pour ces raisons, le taux de charge renforçante totale est plus préférentiellement compris dans un domaine de 70 à 120 pce.

Comme noirs de carbone conviennent par exemple tous les noirs de carbone qui sont conventionnellement utilisés dans les pneumatiques (noirs dits de grade pneumatique) tels que les noirs des séries 100, 200, 300 (grades ASTM), comme par exemple les noirs N 115, N134, N234, N326, N330, N339, N347, N375. Les noirs de carbone pourraient être par exemple déjà incorporés à l'élastomère diénique, notamment isoprénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Selon un autre mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (1) suivante:

(I) $Z - A - S_x - A - Z$ , dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

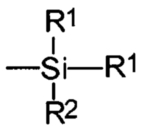 ; 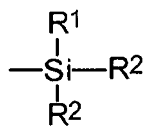 ; 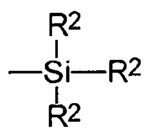

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elles sont renforcées par une charge inorganique telle que silice, les compositions en caoutchouc comportent préférentiellement entre 2 et 15 pce, plus préférentiellement entre 3 et 12 pce d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### 4.3. Agent d'expansion et activateur associé

L'invention a pour caractéristique essentielle d'utiliser en combinaison, à des taux particulièrement élevés, des microparticules d'un carbonate ou un hydrogénocarbonate de sodium ou de potassium à titre d'agent d'expansion, et, à titre d'activateur d'expansion, un acide carboxylique dont la température de fusion est comprise entre 60°C et 220°C.

Par microparticules, on entend de manière générale des particules de taille micrométrique, c'est-à-dire dont la taille médiane (exprimée en poids) est supérieure à 1 $\mu$m et inférieure à 1 mm, ces microparticules pouvant se présenter sous toute forme densifiée, par exemple sous forme de poudre, de microperles, de granulés ou de billes ; une présentation sous forme de poudre est ici préférée.

Une caractéristique essentielle de l'agent d'expansion selon l'invention réside dans la taille médiane de ses

microparticules qui est particulièrement faible, comprise entre 1 et 50 microns, de préférence entre 2 et 30 microns et plus préférentiellement encore comprise dans un domaine de 5 à 25 $\mu$m. Grâce à de telles conditions, il a été observé que la cinétique de vulcanisation des compositions de caoutchouc n'était pas ralentie notablement, sans pénaliser par ailleurs la performance d'adhérence sur glace fondante.

De manière bien connue, un agent d'expansion (« *blowing agent* » en anglais) est un composé décomposable thermiquement, destiné à libérer lors d'une activation thermique, par exemple lors de la vulcanisation du pneumatique, une quantité de gaz importante et ainsi conduire à la formation de bulles. La libération de gaz dans la composition de caoutchouc provient donc de cette décomposition thermique de l'agent d'expansion.

L'agent d'expansion utilisé conformément à la présente invention est un carbonate ou un hydrogénocarbonate (aussi appelé bicarbonate) de sodium ou de potassium. En d'autres termes, il est choisi dans le groupe constitué par le carbonate de sodium, l'hydrogénocarbonate de sodium, le carbonate de potassium, l'hydrogénocarbonate de potassium et les mélanges de tels carbonates (y compris, bien entendu, leurs formes hydratées).

Un tel agent d'expansion a l'avantage de ne dégager que du dioxyde de carbone et de l'eau lors de sa décomposition ; il est donc particulièrement favorable à l'environnement. On utilise particulièrement l'hydrogénocarbonate de sodium ($NaHCO_3$).

Le taux de cet agent d'expansion est compris entre 5 et 25, de préférence entre 8 et 20 pce.

Une autre caractéristique essentielle de l'invention est d'ajouter à l'agent d'expansion précédemment décrit un acide carboxylique dont la température de fusion est comprise entre 60°C et 220°C.

Le taux de cet acide carboxylique est compris entre 2 et 20 pce, de préférence 2 et 15 pce. En se dispersant de manière homogène dans la composition, lors de sa fusion dans le domaine de température spécifique indiqué ci-dessus, cet acide carboxylique a pour fonction d'activer chimiquement (i.e., par réaction chimique) l'agent d'expansion qui, lors de sa décomposition thermique, va ainsi libérer beaucoup plus de bulles de gaz ($CO_2$ et $H_2O$) que s'il était utilisé seul.

Tout acide carboxylique présentant une température de fusion comprise entre 60°C et 220°C (donc solide à 23°C), de préférence entre 100°C et 200°C, en particulier entre 120°C et 180°C, est susceptible de convenir. La température de fusion est une constante physique de base bien connue (disponible par exemple dans *"Handbook of Chemistry and Physics"*) des composés thermofusibles, organiques ou inorganiques ; elle pourra être contrôlée par toute méthode connue, par exemple par la méthode de Thiele, la méthode du banc de Köfler ou encore par analyse DSC.

Les acides carboxyliques peuvent être des monoacides, diacides ou triacides, ils peuvent être aliphatiques ou aromatiques ; ils peuvent également comporter des groupements fonctionnels supplémentaires (autres que COOH) tels que des groupes hydroxyle (OH), des groupes cétone (C=O) ou encore des groupes porteurs d'insaturation éthylénique.

Selon un mode de réalisation préférentiel, le pKa (Ka constante d'acidité) de l'acide carboxylique est supérieur à 1, plus préférentiellement compris entre 2,5 et 12, en particulier compris entre 3 et 10.

Selon un autre mode de réalisation préférentiel, combiné ou non au précédent, l'acide carboxylique comporte, le long de sa chaîne hydrocarbonée, de 2 à 22 atomes de carbone, de préférence de 4 à 20 atomes de carbone.

Les monoacides aliphatiques comportent de préférence, le long de leur chaîne hydrocarbonée, au moins 16 atomes de carbone ; on peut citer à titre d'exemples l'acide palmitique (C16), l'acide stéarique (C18), l'acide nonadécanoique (C19), l'acide béhénique (C20) et leurs différents mélanges. Les diacides aliphatiques comportent de préférence, le long de leur chaîne hydrocarbonée, de 2 à 10 atomes de carbone ; on peut citer à titre d'exemples l'acide oxalique (C2), l'acide malonique (C3), l'acide succinique (C4), l'acide glutarique (C5), l'acide adipique (C6), l'acide pimellique (C7), l'acide subérique (C8), l'acide azélaique (C9), l'acide sébacique (C10) et leurs différents mélanges. A titre de monoacide aromatique, on peut citer par exemple l'acide benzoïque. Les acides comportant des groupes fonctionnels peuvent être des monoacides, diacides ou triacides, du type aliphatiques comme aromatiques ; on peut citer à titre d'exemples l'acide tartrique, l'acide malique, l'acide maléique, l'acide glycolique, l'acide $\alpha$-cétoglutarique, l'acide salycilique, l'acide phtalique ou encore l'acide citrique.

De manière préférentielle, l'acide carboxylique est choisi dans le groupe constitué par l'acide palmitique, l'acide stéarique, l'acide nonadécanoique, l'acide béhénique, l'acide oxalique, l'acide malonique, l'acide succinique, l'acide glutarique, l'acide adipique, l'acide pimellique, l'acide subérique, l'acide azélaique, l'acide sébacique, l'acide benzoïque, l'acide tartrique, l'acide malique, l'acide maléique, l'acide glycolique, l'acide $\alpha$-cétoglutarique, l'acide salycilique, l'acide phtalique, l'acide citrique et les mélanges de ces acides.

Plus particulièrement, l'acide carboxylique est choisi dans le groupe constitué par l'acide malique, l'acide $\alpha$-cétoglutarique, l'acide citrique, l'acide stéarique et leurs mélanges. Plus préférentiellement encore, est utilisé l'acide citrique, l'acide stéarique ou un mélange de ces deux acides.

Une autre caractéristique essentielle de l'invention, pour l'obtention d'une adhérence optimisée de la bande de roulement sur glace fondante, est que la quantité totale d'agent d'expansion et de son activateur associé doit être supérieure à 10 pce, de préférence comprise entre 10 et 40 pce. Cette quantité totale est plus préférentiellement supérieure à 15 pce, en particulier comprise entre 15 et 40 pce.

Pour l'analyse de la granulométrie et le calcul de la taille médiane des microparticules (ou diamètre médian

pour des microparticules supposées sensiblement sphériques), différentes méthodes connues sont applicables, par exemple par diffraction laser (voir par exemple norme ISO-8130-13 ou norme JIS K5600-9-3).

On peut aussi utiliser de manière simple, et d'ailleurs préférentielle, une analyse de la granulométrie par un tamisage mécanique ; l'opération consiste a tamiser une quantité définie d'échantillon (par exemple 200 g) sur une table vibrante pendant 30 min avec des diamètres de tamis différents et dans une gamme de mailles adaptée aux tailles de microparticules à analyser ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique. On rappellera que la taille médiane en poids correspond à 50% (en poids) de la distribution cumulative des particules, c'est-à-dire que, en poids, la moitié des particules ont une taille inférieure à la taille médiane et que l'autre moitié des particules ont une taille supérieure à cette taille médiane.

4.4. Additifs divers

La composition de caoutchouc thermo-expansible peut comporter également tout ou partie des additifs usuels habituellement utilisés dans les compositions de caoutchouc pour bandes de roulement de pneumatiques, comme par exemple des agents de protection tels que cires anti-ozone, anti-ozonants chimiques, anti-oxydants, des agents plastifiants, un système de réticulation à base soit de soufre, soit de donneurs de soufre et/ou de peroxyde et/ou de bismaléimides, des accélérateurs de vulcanisation, des activateurs de vulcanisation.

Selon un mode de réalisation préférentiel, la composition de caoutchouc thermo-expansible comporte également un agent plastifiant liquide (à 20°C) dont la fonction est de ramollir la matrice en diluant l'élastomère diénique et la charge renforçante ; sa Tg (température de transition vitreuse) est par définition inférieure à -20°C, de préférence inférieure à -40°C.

Plus préférentiellement, pour une performance optimale de la bande de roulement du pneumatique de l'invention, ce plastifiant liquide est utilisé à un taux relativement réduit, tel que le rapport pondéral charge renforçante sur agent plastifiant liquide soit supérieur à 2,0, plus préférentiellement supérieur à 2,5, en particulier supérieur à 3,0.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Selon un mode de réalisation particulier de l'invention, le plastifiant liquide est notamment une huile de pétrole, de préférence non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles DAE (*distillate Aromatic Extracts*), les huiles TDAE (*Treated Distillate Aromatic Extracts*), les huiles RAE (*Residual Aromatic Extract oils*), les huiles TRAE (*Treated Residual Aromatic Extract*), les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un autre mode de réalisation préférentiel, la composition de caoutchouc de l'invention peut comporter aussi, à titre de plastifiant solide (à 23°C), une résine hydrocarbonée présentant une Tg supérieur à +20°C, de préférence supérieure à +30°C, telle que décrite par exemple dans les demandes WO 2005/087859, WO 2006/061064 ou WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry*), selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Dans le cas où l'on souhaite augmenter la rigidité de la bande de roulement une fois expansée, sans réduire pour autant la teneur en plastifiant liquide ci-dessus, on pourra avantageusement incorporer des résines renforçantes (e.g. accepteurs et donneurs de méthylène) tels que décrites par exemple dans WO 02/10269 ou US 7,199,175.

La composition de caoutchouc thermo-expansible peut également contenir des activateurs de couplage lorsqu'un agent de couplage est utilisé, des agents de recouvrement de la charge inorganique lorsqu'une charge inorganique est utilisée, ou plus généralement des agents d'aide à la mise en oeuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

4.5. Fabrication des compositions

Les compositions de caoutchouc sont fabriquées dans des mélangeurs appropriés, en utilisant par exemple deux phases de préparation successives selon une procédure générale connue de l'homme du métier: une' première

phase de travail ou malaxage thermomécanique (parfois qualifiée de phase "non-productive") à haute température, jusqu'à une température maximale comprise entre 130°C et 200°C, de préférence entre 145°C et 185°C, au cours de laquelle est incorporé notamment l'activateur d'expansion (acide carboxylique), suivie d'une seconde phase de travail mécanique (parfois qualifiée de phase "productive") à basse température, typiquement inférieure à 120°C, par exemple entre 60°C et 100°C, phase de finition au cours de laquelle sont incorporés l'agent d'expansion et le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge et l'acide carboxylique en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion (carbonate ou hydrogénocarbonate de Na ou K) au mélange ainsi obtenu et refroidi, en malaxant thermo mécaniquement le tout jusqu'à atteindre une température maximale inférieure à 100 C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en oeuvre complémentaires et autres additifs divers, à l'exception de l'agent d'expansion et du système de réticulation. Après travail thermomécanique, tombée et refroidissement du mélange ainsi obtenu, on incorpore alors, de préférence dans cet ordre, l'agent d'expansion, puis le retardateur de vulcanisation (si un tel composé est utilisé), enfin le reste du système de vulcanisation (e.g. soufre et accélérateur) à basse température, généralement dans un mélangeur externe tel qu'un mélangeur à cylindres ; le tout est alors mélangé (phase productive) pendant quelques minutes, par exemple entre 5 et 15 min

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

L'acide carboxylique ayant comme effet possible celui de réduire le délai d'induction (c'est-à-dire le temps nécessaire au début de la réaction de vulcanisation) lors de la cuisson de la composition, on pourra utiliser avantageusement un retardateur de vulcanisation permettant de contrecarrer ce phénomène, et d'offrir ainsi à la composition de caoutchouc le temps nécessaire pour une expansion complète avant sa vulcanisation.

Le taux de ce retardateur de vulcanisation est de préférence compris entre 0,5 et 10 pce, plus préférentiellement entre 1 et 5 pce, en particulier entre 1 et 3 pce.

Les retardateurs de vulcanisation sont bien connus de l'homme du métier. On peut citer par exemple le N-cyclohexylthiophtalimide commercialisé sous la dénomination « Vulkalent G » par la société Lanxess, le N-(trichlorométhylthio)benzène-sulfonamide commercialisé sous dénomination « Vulkalent E/C » par Lanxess, ou encore l'anhydride phtalique commercialisé sous dénomination « Vulkalent B/C » par Lanxess. De manière préférentielle, on utilise le N-cyclohexylthiophtalimide (en abrégé « CTP »).

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de roulement thermo-expansible.

A l'état cru (i.e., non vulcanisé) et donc non expansé, la densité ou masse volumique notée $D_1$ de la composition de caoutchouc thermo-expansible est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre

130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé), la densité notée $D_2$ de la composition de caoutchouc une fois expansée (i.e., à l'état de caoutchouc mousse) est comprise de préférence entre 0,700 à 1,000 g/cm$^3$, plus préférentiellement comprise dans un domaine de 0,750 à 0,950 g/cm$^3$.

Son taux d'expansion volumique noté $T_E$ (exprimé en %) est de préférence compris entre 20% et 75%, plus préférentiellement dans un domaine de 25 à 60%, ce taux d'expansion $T_E$ étant calculé de manière connue à partir des densités $D_1$ et $D_2$ ci-dessus, comme suit :

$$T_E = [(D_1/D_2) - 1] \times 100.$$

5. <u>EXEMPLE DE REALISATION DE L'INVENTION</u>

La composition de caoutchouc thermo-expansible précédemment décrite est avantageusement utilisable dans les bandes de roulement de pneumatiques hiver pour tout type de véhicule, en particulier dans les pneumatiques pour véhicules tourisme, comme démontré dans les essais qui suivent.

Pour les besoins de ces essais, trois compositions de caoutchouc (notées C-0, C-1 et C-2) ont été préparées dont la formulation est donnée dans le tableau 1 (taux des différents produits exprimé en pce). La composition C-0 est la composition témoin, elle ne comporte pas d'agent d'expansion ; la composition C-1 est une composition non conforme à l'invention, elle comporte bien un agent d'expansion (hydrogénocarbonate de sodium) mais dont la taille médiane des microparticules est hors du domaine de l'invention (environ 100 $\mu$m) ; enfin, la composition C-3 est une composition selon l'invention, elle comporte un agent d'expansion (hydrogénocarbonate de sodium) présentant une taille médiane de microparticules comprise entre 1 et 50 $\mu$m (en l'occurrence, environ 10 $\mu$m). En outre, dans les deux compositions C-1 et C-2 est associé à l'agent d'expansion un acide carboxylique en tant que activateur d'expansion. Le taux de plastifiant liquide a été ajusté (fortement réduit) dans les compositions C-1 et C-2 afin de maintenir autant que possible la rigidité après cuisson à un niveau comparable à celui de la composition témoin C-0.

Pour la fabrication de ces compositions, on a procédé de la manière suivante: on a introduit dans un mélangeur interne, dont la température initiale de cuve était d'environ 60°C, successivement la charge renforçante, l'élastomère diénique (coupage NR et BR), l'acide carboxylique pour les compositions C-1 et C-2, ainsi que les divers autres ingrédients à l'exception du système de vulcanisation et de l'agent d'expansion ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" d'environ 150°C. On a récupéré le mélange ainsi obtenu, on l'a refroidi à 50°C environ puis on a incorporé l'agent d'expansion (hydrogénocarbonate de Na), le retardateur de vulcanisation (CTP), ensuite l'accélérateur sulfénamide et le soufre sur un mélangeur externe (homo-finisseur) à 30°C, en mélangeant le tout (phase productive) pendant quelques minutes.

Les compositions ainsi préparées, utilisables directement comme bandes de roulement de pneus tourisme hiver, ont été ensuite vulcanisées sous presse, et leurs propriétés mesurées avant et après cuisson (voir tableaux 2 et 3 annexés), comme expliqué ci-après.

Tout d'abord, concernant les propriétés de rhéométrie (cuisson) du tableau 2, les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : Ti est le délai d'induction, c'est-à-dire le temps nécessaire au début de la réaction de vulcanisation ; $T_\alpha$ (par exemple $T_{95}$) est le temps nécessaire pour atteindre une conversion de $\alpha$%, c'est-à-dire $\alpha$% (par exemple 95%) de l'écart entre les couples minimum et maximum.

On mesure également le temps de grillage (noté T5), à 130°C, conformément à la norme française NF T 43-005 (1991). L'évolution de l'indice consistométrique en fonction du temps permet également de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au-dessus de la valeur minimale mesurée pour cet indice.

A la lecture du tableau 2, on constate tout d'abord que, comparativement à la composition témoin C-0, le processus de vulcanisation (cuisson) est notablement pénalisé (ralenti) sur la composition C-1 non conforme à l'invention, comme illustré notamment par les augmentations notables des paramètres T5, Ti et $T_{95}$ : on note en particulier que la

durée totale de cuisson, pouvant être illustrée par exemple par la différence ($T_{95}$ - Ti), est quasiment multipliée par 4 (25 min au lieu de 7 min).

Par contre, de manière inattendue, sur la composition conforme à l'invention (C-2) incorporant des microparticules dont la taille médiane est fortement réduite comparativement à la composition C-1, on constate que toutes les propriétés de rhéométrie ci-dessus (T5, Ti et $T_{95}$) sont nettement moins affectées par la présence de l'agent d'expansion; ces propriétés de rhéométrie restent relativement proches des valeurs initiales observées sur la composition témoin (C-0) dépourvue d'agent d'expansion, avec notamment une durée totale de cuisson ($T_{95}$ - Ti), qui n'est augmentée dans ce cas que de 2 min (9 min au lieu de 7 min).

Concernant maintenant les propriétés du tableau 3, on note par ailleurs que les compositions de caoutchouc C-1 et C-2, respectivement comparative et conforme à l'invention, présentent après cuisson (une fois à l'état de caoutchouc mousse, c'est-à-dire expansée) une densité nettement réduite dans les deux cas, correspondant à un taux d'expansion volumique particulièrement élevé, d'environ 30%.

Enfin, pour déterminer les propriétés d'adhérence sur glace des trois compositions ci-dessus (C-0, C-1 et C-2), ces dernières ont été soumises à un test laboratoire consistant à mesurer leur coefficient de friction sur glace.

Le principe repose sur un patin de composition de caoutchouc glissant à une vitesse donnée (par exemple égale à 5 km/h) sur une piste de glace (température de la glace fixée a -2 C) avec une charge imposée (par exemple égale à 3 kg/cm$^2$). On mesure les forces générées dans le sens de l'avancement (Fx) du patin et perpendiculaire à l'avancement (Fz) ; le rapport Fx/Fz détermine le coefficient de friction de l'éprouvette sur la glace. Le principe de ce test est bien connu de l'homme du métier (voir par exemple demandes de brevet EP 1052270, EP 1505112 et WO 2010/009850). Il permet d'évaluer, dans des conditions représentatives, l'adhérence sur glace fondante qui serait obtenue lors d'un essai de roulage sur un véhicule équipé de pneumatiques dont la bande de roulement est constituée des mêmes compositions de caoutchouc.

Les résultats sont exprimés dans le tableau 4, une valeur supérieure à celle de la composition témoin (C-0), arbitrairement fixée à 100, indiquant un résultat amélioré c'est-à-dire une aptitude à une distance de freinage plus courte. Ces résultats du tableau 3 démontrent bien pour les compositions C-1 et C-2 expansées, par rapport à la composition C-0 non expansée, une augmentation notable du coefficient de friction à l'état neuf comme à l'état partiellement usé (volontairement érodé de manière à retirer 1 mm d'épaisseur), et donc une amélioration d'adhérence sur glace, ceci grâce à l'utilisation combinée de l'agent d'expansion spécifique et de l'acide carboxylique associé, aux taux élevés préconisés. On note en particulier que la composition C-2 selon l'invention, ne se distinguant de la composition C-1 que par la taille de ses microparticules d'hydrogénocarbonate de sodium, présente après rodage une performance encore supérieure (indice 138 comparée à 132).

En conclusion, tous les résultats commentés ci-dessus démontrent que, grâce à l'invention et en particulier l'utilisation de microparticules de taille spécifique d'un carbonate ou hydrogénocarbonate de sodium ou de potassium, il est possible de concevoir des formulations de caoutchouc mousse permettant d'augmenter de manière importante l'adhérence sur glace des bandes de roulement de pneumatiques, ceci sans pénaliser par ailleurs les propriétés de cuisson de ces pneumatiques.

**Tableau 1**

| Composition N°: | C-0 | C-1 | C-2 |
|---|---|---|---|
| BR (1) | 60 | 60 | 60 |
| NR (2) | 40 | 40 | 40 |
| silice (3) | 80 | 80 | 80 |
| agent de couplage (4) | 6.4 | 6.4 | 6.4 |
| noir de carbone (5) | 5 | 5 | 5 |
| agent d'expansion (6) | - | 12.5 | - |
| agent d'expansion (7) | - | - | 12.5 |
| acide carboxylique (8) | - | 7.2 | 7.2 |
| plastifiant liquide (9) | 55 | 16 | 16 |
| résine plastifiante (10) | 14 | 14 | 14 |
| DPG (11) | 1.9 | 1.9 | 1.9 |
| ZnO | 1.2 | 1.2 | 1.2 |
| acide stéarique | 1 | 1 | 1 |
| cire anti-ozone | 1.5 | 1.5 | 1.5 |
| antioxydant (12) | 2 | 2 | 2 |
| Soufre | 2 | 2 | 2 |

(suite)

| Composition N°: | C-0 | C-1 | C-2 |
|---|---|---|---|
| accélérateur (13) | 1.7 | 1.7 | 1.7 |
| retardateur (14) | - | 2.5 | 2.5 |

(1) BR avec 4,3% de 1-2 ; 2,7% de trans ; 93% de cis 1-4 (Tg = -104°C) ;
(2) caoutchouc naturel (peptisé) ;
(3) silice « Ultrasil 7000 » de la société Degussa, type "HDS" (BET et CTAB : environ 160 $m^2/g$);
(4) agent de couplage TESPT (« Si69 » de la société Evonik) ;
(5) grade ASTM N234 (société Cabot) ;
(6) hydrogénocarbonate de sodium (« Cellmic 266 » de la société Sankyo Kasei ; taille médiane des microparticules égale à environ 100 μm) ;
(7) hydrogénocarbonate de sodium (« Bifun Jiuso » de la société Asahi Glass ; taille médiane des microparticules égale à environ 10 μm) ;
(8) acide citrique (société Kanto Kagaku) ;
(9) huile MES (« Catenex SNR » de la société Shell) ;
(10) résine C5/C9 (« Escorez ECR-373 » de la société Exxon) ;
(11) diphénylguanidine (« Perkacit DPG » de la société Flexsys) ;
(12) N-1,3-diméthylbutyl-N-phénylparaphénylènediamine (« Santoflex 6-PPD » de la société Flexsys);
(13) N-dicyclohexyl-2-benzothiazol-sulfénamide (« Santocure CBS » de la société Flexsys) ;
(14) CTP (N-cyclohexylthiophtalimide ; « Vulkalent G » de la société Lanxess).

**Tableau 2**

| Composition : | C-0 | C-1 | C-2 |
|---|---|---|---|
| T5 (grillage) à 130°C (min) | 13 | 23 | 16 |
| Ti (min) à 150°C | 5 | 8 | 7 |
| $T_{95}$ (min) à 150°C | 12 | 33 | 16 |
| $T_{95}$-Ti (min) à 150°C | 7 | 25 | 9 |

**Tableau 3**

| Composition : | C-0 | C-1 | C-2 |
|---|---|---|---|
| Densité avant cuisson | 1.14 | 1.216 | 1.211 |
| Densité après cuisson | 1.14 | 0.95 | 0.93 |
| Taux expansion vol. (%) | 0 | 28 | 30 |

**Tableau 4**

| Composition | C-0 | C-1 | C-2 |
|---|---|---|---|
| Friction sur glace (-2°C) (1) | 100 | 105 | 105 |
| Friction sur glace (-2°C) (2) | 100 | 132 | 138 |

(1) patin de gomme a l'état neuf
(2) patin de gomme après rodage

## Revendications

1. Composition de caoutchouc thermo-expansible comportant au moins un élastomère diénique, plus de 50 pce d'une charge renforçante, entre 5 et 25 pce de microparticules d'un carbonate ou hydrogénocarbonate de sodium ou

potassium, lesdites microparticules ayant une taille médiane en poids comprise entre 1 et 50 μm, entre 2 et 20 pce d'un acide carboxylique dont la température de fusion est comprise entre 60°C et 220°C, la teneur totale en (hydrogéno)carbonate et acide carboxylique étant supérieure à 10 pce.

**2.** Composition selon la revendication 1, dans laquelle l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

**3.** Composition selon la revendication 2, comportant 50 à 100 pce de caoutchouc naturel ou de polyisoprène de synthèse, de préférence en coupage avec au plus 50 pce d'un polybutadiène ayant un taux de liaisons cis-1,4 supérieur à 90%.

**4.** Composition selon la revendication 2, comportant 50 à 100 pce d'un polybutadiène ayant un taux de liaisons cis-1,4 supérieur à 90%, de préférence utilisé en coupage avec au plus 50 pce de caoutchouc naturel ou un polyisoprène de synthèse.

**5.** Composition selon l'une quelconque des revendications 1 à 4, dans laquelle le taux de charge renforçante est compris entre 50 et 150 pce, de préférence compris dans un domaine de 70 à 120 pce.

**6.** Composition selon l'une quelconque des revendications 1 à 5, dans laquelle la composition de caoutchouc comporte en outre un agent plastifiant liquide à 20°C, à un taux tel que le rapport pondéral charge renforçante sur agent plastifiant liquide est supérieur à 2,0, de préférence supérieur à 2,5.

**7.** Composition selon l'une quelconque des revendications 1 à 6, dans laquelle le taux de carbonate ou hydrogénocarbonate est compris entre 8 et 20 pce.

**8.** Composition selon l'une quelconque des revendications 1 à 7, dans laquelle la taille médiane en poids des microparticules est comprise entre 2 et 30 μm, de préférence dans un domaine de 5 à 25 μm.

**9.** Composition selon l'une quelconque des revendications 1 à 8, dans laquelle le taux d'acide carboxylique est compris entre 2 et 15 pce.

**10.** Composition selon l'une quelconque des revendications 1 à 9, dans laquelle la teneur totale en (hydrogéno)carbonate et acide carboxylique est supérieure à 15 pce, de préférence comprise entre 15 et 40 pce.

**11.** Composition selon l'une quelconque des revendications 1 à 10, dans laquelle la température de fusion de l'acide carboxylique est comprise entre 100°C et 200°C, de préférence entre 120 et 180°C.

**12.** Composition selon l'une quelconque des revendications 1 à 11, dans laquelle le pKa de l'acide carboxylique est supérieur à 1, de préférence compris entre 2,5 et 12.

**13.** Composition selon l'une quelconque des revendications 1 à 12, dans laquelle l'acide carboxylique est choisi dans le groupe constitué par l'acide palmitique, l'acide stéarique, l'acide nonadécanoique, l'acide béhénique, l'acide oxalique, l'acide malonique, l'acide succinique, l'acide glutarique, l'acide adipique, l'acide pimellique, l'acide subérique, l'acide azélaique, l'acide sébacique, l'acide benzoïque, l'acide tartrique, l'acide malique, l'acide maléique, l'acide glycolique, l'acide α-cétoglutarique, l'acide salycilique, l'acide phtalique, l'acide citrique et les mélanges de ces acides, préférentiellement choisi dans le groupe constitué par l'acide malique, l'acide α-cétoglutarique, l'acide citrique, l'acide stéarique et les mélanges de ces acides.

**14.** Composition selon l'une quelconque des revendications 1 à 13, comportant en outre un retardateur de vulcanisation, de préférence à un taux compris entre 0,5 et 10 pce.

**15.** Pneumatique, à l'état non vulcanisé, dont la bande de roulement comporte une composition de caoutchouc thermo-expansible selon l'une quelconque des revendications 1 à 14.

**Patentansprüche**

1. Wärmeexpandierbare Kautschukzusammensetzung, umfassend mindestens ein Dienelastomer, mehr als 50 phe eines verstärkenden Füllstoffs, zwischen 5 und 25 phe Mikroteilchen eines Natrium- oder Kaliumcarbonats oder -hydrogencarbonats, wobei die Mikroteilchen eine gewichtsmittlere Größe zwischen 1 und 50 μm aufweisen, und zwischen 2 und 20 phe einer Carbonsäure, deren Schmelztemperatur zwischen 60°C und 220 °C liegt, wobei der Gesamtgehalt an (Hydrogen)Carbonat und Carbonsäure über 10 phe liegt.

2. Zusammensetzung nach Anspruch 1, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Zusammensetzung nach Anspruch 2, umfassend 50 bis 100 phe Naturkautschuk oder synthetisches Polyisopren, vorzugsweise als Verschnitt mit höchstens 50 phe eines Polybutadiens mit einem Gehalt an cis-1,4-Bindungen von mehr als 90%.

4. Zusammensetzung nach Anspruch 2, umfassend 50 bis 100 phe eines Polybutadiens mit einem Gehalt an cis-1,4-Bindungen von mehr als 90%, vorzugsweise als Verschnitt mit höchstens 50 phe Naturkautschuk oder synthetischem Polyisopren.

5. Zusammensetzung nach einem der Ansprüche 1 bis 4, wobei der Gehalt an verstärkendem Füllstoff zwischen 50 und 150 phe und vorzugsweise in einem Bereich von 70 bis 120 phe liegt.

6. Zusammensetzung nach einem der Ansprüche 1 bis 5, wobei die Kautschukzusammensetzung außerdem einen bei 20°C flüssigen Weichmacher in einem solchen Gehalt, dass das Gewichtsverhältnis von verstärkendem Füllstoff zu flüssigem Weichmacher größer als 2,0 und vorzugsweise größer als 2,5 ist, umfasst.

7. Zusammensetzung nach einem der Ansprüche 1 bis 6, wobei der Gehalt an Carbonat oder Hydrogencarbonat zwischen 8 und 20 phe liegt.

8. Zusammensetzung nach einem der Ansprüche 1 bis 7, wobei die gewichtsmittlere Größe der Mikroteilchen zwischen 2 und 30 μm und vorzugsweise in einem Bereich von 5 bis 25 μm liegt.

9. Zusammensetzung nach einem der Ansprüche 1 bis 8, wobei der Gehalt an Carbonsäure zwischen 2 und 15 phe liegt.

10. Zusammensetzung nach einem der Ansprüche 1 bis 9, wobei der Gesamtgehalt an (Hydrogen)Carbonat und Carbonsäure über 15 phe und vorzugsweise zwischen 15 und 40 phe liegt.

11. Zusammensetzung nach einem der Ansprüche 1 bis 10, wobei die Schmelztemperatur der Carbonsäure zwischen 100°C und 200°C und vorzugsweise zwischen 120°C und 180°C liegt.

12. Zusammensetzung nach einem der Ansprüche 1 bis 11, wobei der pKa-Wert der Carbonsäure über 1 und vorzugsweise zwischen 2,5 und 12 liegt.

13. Zusammensetzung nach einem der Ansprüche 1 bis 12, wobei die Carbonsäure aus der Gruppe bestehend aus Palmitinsäure, Stearinsäure, Nonadecansäure, Behensäure, Oxalsäure, Malonsäure, Bernsteinsäure, Glutarsäure, Adipinsäure, Pimelinsäure, Suberinsäure, Azelainsäure, Sebacinsäure, Benzoesäure, Weinsäure, Äpfelsäure, Maleinsäure, Glykolsäure, α-Ketoglutarsäure, Salicylsäure, Phthalsäure, Citronensäure und Mischungen dieser Säuren und vorzugsweise aus der Gruppe bestehend aus Äpfelsäure, α-Ketoglutarsäure, Citronensäure, Stearinsäure und Mischungen dieser Säuren ausgewählt ist.

14. Zusammensetzung nach einem der Ansprüche 1 bis 13, wobei die Kautschukzusammensetzung außerdem einen Vulkanisationsverzögerer umfasst, vorzugsweise in einer Menge zwischen 0,5 und 10 phe.

15. Reifen, dessen Lauffläche in unvulkanisiertem Zustand eine wärmeexpandierbare Kautschukzusammensetzung nach einem der Ansprüche 1 bis 14 umfasst.

## Claims

1. Heat-expandable rubber composition comprising at least a diene elastomer, more than 50 phr of a reinforcing filler, between 5 and 25 phr of microparticles of a sodium or potassium carbonate or hydrogen carbonate, said microparticles having a median size by weight of between 1 and 50 μm, between 2 and 20 phr of a carboxylic acid, the melting point of which is between 60°C and 220°C, the total content of (hydrogen) carbonate and carboxylic acid being greater than 10 phr.

2. Composition according to Claim 1, in which the diene elastomer is selected from the group consisting of natural rubber, synthetic polyisoprenes, polybutadienes, butadiene copolymers, isoprene copolymers and the mixtures of these elastomers.

3. Composition according to Claim 2, comprising from 50 to 100 phr of natural rubber or of synthetic polyisoprene, preferably as a blend with at most 50 phr of a polybutadiene having a content of cis-1,4- bonds of greater than 90%.

4. Composition according to Claim 2, comprising from 50 to 100 phr of a polybutadiene having a content of cis-1,4- bonds of greater than 90%, preferably used as a blend with at most 50 phr of natural rubber or a synthetic polyisoprene.

5. Composition according to any one of Claims 1 to 4, in which the content of reinforcing filler is between 50 and 150 phr, preferably within a range from 70 to 120 phr.

6. Composition according to any one of Claims 1 to 5, in which the rubber composition further comprises a plasticizing agent that is liquid at 20°C, at a content such that the weight ratio of reinforcing filler to liquid plasticizing agent is greater than 2.0, preferably greater than 2.5.

7. Composition according to any one of Claims 1 to 6, in which the content of carbonate or hydrogen carbonate is between 8 and 20 phr.

8. Composition according to any one of Claims 1 to 7, in which the median size by weight of the microparticles is between 2 and 30 μm, preferably within a range from 5 to 25 μm.

9. Composition according to any one of Claims 1 to 8, in which the content of carboxylic acid is between 2 and 15 phr.

10. Composition according to any one of Claims 1 to 9, in which the total content of (hydrogen) carbonate and carboxylic acid is greater than 15 phr, preferably between 15 and 40 phr.

11. Composition according to any one of Claims 1 to 10, in which the melting point of the carboxylic acid is between 100°C and 200°C, preferably between 120°C and 180°C.

12. Composition according to any one of Claims 1 to 11, in which the $pK_a$ of the carboxylic acid is greater than 1, preferably between 2.5 and 12.

13. Composition according to any one of Claims 1 to 12, in which the carboxylic acid is selected from the group consisting of palmitic acid, stearic acid, nonadecanoic acid, behenic acid, oxalic acid, malonic acid, succinic acid, glutaric acid, adipic acid, pimelic acid, suberic acid, azelaic acid, sebacic acid, benzoic acid, tartaric acid, malic acid, maleic acid, glycolic acid, α-ketoglutaric acid, salicylic acid, phthalic acid, citric acid and the mixtures of these acids.

14. Composition according to any one of Claims 1 to 13, further comprising a vulcanization retarder, preferably at a content of between 0.5 and 10 phr.

15. Tyre, in the unvulcanized state, the tread of which comprises a heat-expandable rubber composition according to anyone of Claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3878147 A
- JP 3159803 A
- JP 2002211203 A
- EP 940435 A
- WO 2008080750 A
- WO 2008080751 A
- WO 2009083125 A
- WO 2009112220 A
- JP 2003183434 A
- JP 2004091747 A
- JP 2006299031 A
- JP 2007 A
- JP 039499 A
- JP 2007314683 A
- JP 2008001826 A
- JP 2008150413 A
- EP 826522 A
- US 5147477 A
- US 6336487 B
- WO 2011064128 A
- GB 1367776 A
- KR 20030019982 A
- WO 2012163998 A
- US 6013718 A
- US 5977238 A
- US 6815473 B
- US 20060089445 A
- US 6503973 B
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 02088238 A
- WO 2005087859 A
- WO 2006061064 A
- WO 2007017060 A
- WO 0210269 A
- US 7199175 B
- EP 1052270 A
- EP 1505112 A
- WO 2010009850 A